# FASCICULE DE BREVET EUROPEEN

(11) **EP 0 875 543 B1**
(45) Date de publication et mention de la délivrance du brevet: **02.07.2003**
(21) Numéro de dépôt: 98401012.4
(22) Date de dépôt: 24.04.1998
(51) Int. Cl.: C09D 5/02, D06M 15/29, D06M 15/347, D21H 17/39, C08L 57/10, C08F 220/12

(54) **Système monocomposant à base de copolymères coréactifs**
Einphasiges System auf Basis von miteinander reagierenden Copolymerisaten
Single phase systeme based on coreactive copolymers

(30) Priorité: 29.04.1997 FR 9705272
(43) Date de publication de la demande: 04.11.1998
(73) Titulaire: Atofina, 92800 Puteaux (FR)
(72) Inventeur: Vergé, Christophe, 27170 Beaumontel (FR); Betremieux, Isabelle, 27170 Beaumontel (FR)
(74) Mandataire: Chaillot, Geneviève

(56) Documents cités:
- EP-A- 0 514 654
- DE-A- 2 749 386
- FR-A- 1 364 638
- JP-B- 45 018 724
- US-A- 3 459 716
- PATENT ABSTRACTS OF JAPAN vol. 007, no. 205 (C-185), 9 septembre 1983 & JP 58 104902 A (YUKA BAADEITSUSHIE KK), 22 juin 1983,

## Description

L'invention concerne les compositions aqueuses désignées par latex contenant des polymères coréactifs réticulables thermiquement sans formation de formol.

Les compositions de l'invention sont utilisées dans les industries de revêtements, en particulier dans le textile, les peintures, les adhésifs, le papier, le cuir.

L'industrie des revêtements utilise des polymères en dispersions aqueuses comme liant dans des formulations filmogènes qui nécessitent dans certains cas une post-réticulation destinée à améliorer les propriétés des revêtements obtenus, en particulier aux niveaux de leur tenue aux solvants et de leurs propriétés mécaniques ainsi que la réduction du collant superficiel.

Les compositions utilisées actuellement sont essentiellement basées sur des polymères contenant des motifs de N-Méthylol Acrylamide ou de N-Méthylol Meth Acrylamide désignés ci-après par NMA ou NMMA.

Ces compositions sont autoréticulées lors du traitement thermique du film à une température allant de 100 à 160°C. Cette étape s'accompagne de la formation de formol généralement désigné par formol libérable. A noter que la réaction de réticulation se produit partiellement au cours de la synthèse et conduit à la formation de formol, généralement désigné par formol libre.

Les contraintes en matière de protection des personnes et de l'environnement font qu'on exige de plus en plus des latex ne dégageant pas de produits nocifs tels que les solvants organiques volatils utilisés pour la plastification temporaire des liants ou le formol formé par la réticulation.

Le problème que cherche à résoudre l'invention est la mise au point des compositions aqueuses réticulables thermiquement sans formation de formol libre ou libérable.

Plusieurs documents ont tenté d'apporter une solution à ce problème. Parmi eux on peut citer US 5071902 et EP 488605 dont la solution est basé sur le piégeage du formol par des dérivés de l'hydroxyéthylène urée ou des acétoacétoxyéthyle.

Une autre solution tentée est celle basée sur la substitution de NMA par d'autres monomères ou une combinaison de monomères tels que l'acide acrylamidoglycolique (Highlink AG) (EP 292377 ; EP 311902 ; EP 392350) ou encore le N-(2,2 diméthoxy, 1 hydroxyéthyl) acrylamide (Highlink DMH) (US 4918139 ; EP 514654) ou encore par le N Alkylol acrylamide (US 5021529).

La demanderesse vient maintenant de mettre au point des compositions ne contenant pas de quantité substantielle de formol libre et dont la teneur en formol libérable au cours du traitement thermique est quasiment nulle et conduisant à des revêtements ayant des propriétés équivalentes à celles obtenues avec le NMA.

Selon une première forme l'invention concerne les systèmes monocomposants réticulables thermiquement sans formation de formol libre ou libérable, leurs procédés de préparation ainsi que les films réticulés obtenus à partir de ces compositions.

Les systèmes monocomposants de l'invention sont des dispersions aqueuses de particules de polymères de diamètre compris entre 50 et 500 nm. Lesdits polymères renferment-au moins- deux fonctions coréactives f₁ et f₂.

Selon une forme de l'invention f₁ et f₂ sont portées par le même polymère. Selon une autre forme elles sont portées par plusieurs polymères distincts.

Quelle que soit la forme de l'invention, lesdits polymères sont obtenus par polymérisation radicalaire en émulsion.

f₁ est une fonction acétal portée par un monomère M₁ généralement choisi dans le groupe constitué de :
- les N-(2,2-dialcoxy 1-hydroxy éthyl)-(méth)acrylamides et les N-(1,2,2-trialcoxy éthyl)-(méth)acrylamides, le terme alcoxy signifiant alcoxy en C₁-C₄, tels que :
   . le N-(2,2-diméthoxy 1-hydroxy éthyl)-acrylamide ;
   . le N-(2,2-diméthoxy 1-hydroxy éthyl)-méthacrylamide ;
   . le N-(1,2,2-triméthoxy éthyl)-acrylamide ;
   . le N-(1,2,2-triméthoxy éthyl)-méthacrylamide ;
   . le N-(2,2-dibutoxy 1-hydroxy éthyl)-acrylamide ;
   . le N-(2,2-dibutoxy 1-hydroxy éthyl)-méthacrylamide ;
   . le N-(1,2,2-tributoxy éthyl)-acrylamide ;
   . le N-(1,2,2-tributoxy éthyl)-méthacrylamide ;
- le 4-acrylamidobutyraldéhyde diméthyl ou diéthyl acétal ;
- le méthacrylamidoacétaldéhyde diméthyl acétal ;
- l'acrylate de diéthoxypropyle ;
- le méthacrylate de diéthoxypropyle ;
- l'acryloyloxopropyl-1,3-dioxolane ;
- le méthacryloyloxopropyl-1,3-dioxolane; et
- le N-(1,1-diméthoxybut-4-y1)méthacrylamide.

Selon une forme avantageuse de l'invention M₁ est le N-(2,2 diméthoxy 1-hydroxyéthyl)acrylamide désigné ci-après par DMH.

f₂ est une fonction alkylol acrylamide portée par un monomère M₂ généralement choisi dans le groupe constitué par les N-méthylolamides d'acides carboxyliques insaturés ayant 3 à 10 atomes de carbone, tels que le N-méthylolacrylamide et le N-méthylolméthacrylamide, le N-méthylolmaléimide, l'acide N-méthylolmaléinamique, les esters d'acide N-méthylolmaléinamique, les N-méthylolamides des acides vinyl aromatiques, tels que le N-méthylol-p-vinylbenzamide, et, à titre de monomères (b) à groupes N-alkylol masqués, les N-(alcoxy inférieur méthyl)amides de l'acide acrylique et/ou méthacrylique.

Les monomères M₂ préférés sont le N-méthylolacrylamide et le N-méthylol méthacrylamide, désignés ci-après respectivement par NMA et NMMA.

Le monomère M₂ le plus avantageux est le NMA.

Outre les monomères M₁ et M₂ porteurs des fonctions f₁ et f₂, les polymères de l'invention contiennent au moins un motif issu d'un monomère M₃ choisi dans le groupe constitué de monomères à insaturation éthylénique polymérisables par voie radicalaire en émulsion aqueuse. A titre d'exemple non limitatif M₃ peut être choisi parmi les monomères (méth)acryliques, styréniques, vinyliques, tels que les (méth)acrylate de méthyle, (méth)acrylate d'éthyl-2 hexyle, l'acétate de vinyle, le styrène, les esters de l'acide versatique, l'acide (méth)acrylique, l'acrylamide...

En général le NMA permet une très bonne réticulation mais accompagnée de formation de formol. En revanche le DMH est un piège à formol mais réticule très mal.

La demanderesse a trouvé d'une façon inattendue et surprenante que l'association NMA / DMH, sous forme de copolymère ou de mélange de polymère permet de tirer partie des avantages de chacun des deux monomères fonctionnels puisque l'on obtient un degré de réticulation très proche de celui obtenu avec le NMA et des teneurs en formaldéhyde libérable lors du traitement thermique quasiment nulle.

Les motifs issus de M₁ et M₂ portés par les polymères de l'invention représentent séparément de 1 à 10 % et de préférence de 2 à 8 % en poids desdits polymères.

Le rapport massique M₁/M₂ est compris entre 0,2 et 5.

Selon l'une ou l'autre forme de l'invention chacun des polymères peut être fonctionnalisé, par un monomère porteur d'une fonction acétal (DMH) ou par un monomère porteur d'une fonction alkylol acrylamide (NMA), ou même par les deux monomères, le polymère étant synthétisé conformément aux techniques de polymérisation en émulsion connues de l'homme de l'art. Ainsi, la réaction est préférentiellement conduite sous atmosphère inerte en présence d'amorceurs radicalaires. Le système d'amorçage utilisé peut être un système oxydo réducteur tel que Na₂S₂O₈, (NH₄)₂S₂O₈ / Na₂S₂O₅, Na₂SO₃, un système thermique tel que (NH₄)₂S₂O₈, les quantités utilisées étant comprises entre 0,2 et 1,0 % en poids par rapport à la masse totale des monomères, préférentiellement entre 0,25 et 0,5 % en poids.

La réaction de polymérisation en émulsion selon l'invention est menée à une température comprise entre 65 et 85°C et est fonction de la nature du système d'amorçage utilisé : 65 - 75°C pour les systèmes oxydo réducteurs à base de peroxodisulfate et de métabisulfite, 70 - 85°C pour les systèmes thermiques à base de peroxodisulfate seul.

La préparation des dispersions selon l'invention est effectuée de préférence selon un procédé de type semi-continu permettant de limiter les dérives de composition qui sont fonction des différences de réactivité des différents monomères. L'introduction des monomères sous forme d'une préémulsion avec une partie de l'eau et des tensio-actifs est ainsi généralement réalisée sur une période de temps de 3 heures 30 à 5 heures. Il est également utile, bien que non indispensable, d'effectuer un ensemencement de 1 à 15 % des monomères. Les systèmes émulsifiants utilisés dans le procédé de polymérisation en émulsion selon l'invention sont choisis dans la gamme des émulsifiants possédant une balance hydrophile/lipophile adaptée. Les systèmes préférés sont constitués par l'association d'un tensio-actif anionique, tel que le laurylsulfate de sodium, les nonylphénol sulfates éthoxylés en particulier à 20 - 25 moles d'oxyde d'éthylène, le benzène dodécylsulfonate et les alcools gras éthoxylés sulfates, et d'un tensio-actif non ionique, tel que les nonylphénols éthoxylés en particulier à 10 - 40 moles d'oxyde d'éthylène et les alcools gras éthoxylés.

La quantité totale d'émulsifiant est généralement comprise dans la gamme de 1 à 5 % en poids et préférentiellement de 2 à 4 % en poids par rapport aux monomères.

Les mélanges des dispersions selon l'invention sont réalisés à la température ambiante.

Chaque latex est alors analysé en particulier au niveau des propriétés du film obtenu par un séchage à température ambiante, puis du même film après un traitement thermique supplémentaire de 15 minutes à 160°C.

Dans le cas de polymères monofonctionnalisés, divers mélanges, dans diverses proportions, des deux latex sont alors réalisés à température ambiante. Les films issus des mélanges de latex sont alors caractérisés comme précédemment après un séchage à température ambiante puis un traitement thermique supplémentaire de 15 minutes à 160°C.

Les propriétés du film évaluées sont la résistance au solvant qui est déterminée par des mesures de pourcentages d'insolubles d'éprouvettes immergées dans l'acétone à température ambiante pendant 24 h et du pourcentage d'acétone absorbé par ces mêmes éprouvettes que nous appelons indice de gonflement, ainsi que les propriétés mécaniques du film au travers d'un test de traction (détermination de la contrainte et de l'allongement à la rupture).

Le degré de réticulation du film et donc ses bonnes propriétés applicatives seront caractérisés par un taux d'insolubles le plus élevé possible, un indice de gonflement le plus faible possible, ainsi qu'une contrainte et un allongement à la rupture les plus élevés possible.

L'existence d'une réticulation à température ambiante du film lors de la coalescence sera mise en évidence par un film issu de mélange conduisant à des propriétés supérieures à celles des latex de départ alors que l'existence d'une réticulation en température du film sera mise en évidence par la comparaison des propriétés avant et après traitement thermique.

Dans le cas présent, l'association DMH / NMA que ce soit dans un copolymère ou dans le cas de mélanges de latex monofonctionnalisés, conduit à un film qui réticule thermiquement pour aboutir à des degrés de réticulation équivalant au NMA tout seul mais avec des teneurs en formol libérable très faibles.

La bonne stabilité au stockage du mélange de latex et donc la possibilité de produire un système monocomposant, est vérifiée par la détermination des propriétés d'un film obtenu à partir du mélange ayant subi un stockage de 10 jours à 60°C et la comparaison de ces propriétés avec les propriétés du film issu du mélange fraîchement préparé. La stabilité du latex est également vérifiée par un suivi des caractéristiques de base du latex à savoir la taille des particules, la viscosité, etc...

Dans le cas présent, les propriétés du film issu du mélange avant et après traitement thermique 15 minutes à 160°C sont égales quel que soit le traitement subi par le mélange de latex (mélange frais ou ayant subi un traitement de 10 jours à 60°C), montrant la bonne stabilité au stockage du mélange.

Les exemples suivants illustrent l'invention sans la limiter.

### Exemple 1

### Synthèse des latex

Les latex ont été synthétisés de manière classique selon un procédé de polymérisation semi continu par addition simultanée et séparée, d'une solution d'amorceur et d'une préémulsion sur un pied de cuve, préalablement chauffé à 75°C, se trouvant dans le réacteur, équipé d'une circulation d'eau chaude dans la double enveloppe, d'une agitation centrale, et d'un condenseur.

Certaines synthèses ont été réalisées en milieu tamponné du bicarbonate de sodium ayant été, dans ce cas, introduit dans la préémulsion.

| Pied de cuve | |
|---|---|
| Eau | 54.00 parts |
| Alcool gras éthoxylé sulfate de sodium à 32 % dans l'eau | 0.25 |
| Alcool gras éthoxylé à 65% dans l'eau | 0.05 |

| Préémulsion | |
|---|---|
| Eau | 62.00 |
| Alcool gras éthoxylé sulfate de sodium à 32 % dans l'eau | 2.25 |
| Alcool gras éthoxylé à 65% dans l'eau | 0.45 |
| Monomères | 100.00 |
| NaHCO₃ | (0.20) |

| Solution d'amorceur | |
|---|---|
| Eau | 6.00 |
| Persulfate de sodium | 0.30 |
| Les quantités sont exprimées en parts de matières actives. | |

### Mode opératoire

Introduire le pied de cuve dans le réacteur, homogénéiser et porter à 75°C.

Lorsque la termpérature du pied de cuve atteint 75°C, couler la préémulsion et la solution d'amorceur en 4 h.

Laisser réagir une heure supplémentaire à 75°C.

Refroidir jusqu'à température ambiante, et filtrer sur toile de 100 microns.

### Caractéristiques des latex synthétisés

Les caractéristiques des produits svnthétisés sont les suivantes :

| Monomères | A | B | C |
|---|---|---|---|
| Acrylate d'éthyle | 97 | 98 | 97 |
| NMA | 3 | - | 1 |
| Highlink DMH | - | 2 | 2 |
| Extrait sec (%) | 44.0 | 43.8 | 44.5 |
| pH | 6.1 | 3.2 | 6.1 |
| Diamètre (nm) | 134 | 149 | 172 |
| Viscosité (mPa.s) | < 100 | < 100 | < 100 |

Le NMA est commercialisé en solution aqueuse à 48 % par la société CYTEC.

L'Highlink DMH est commercialisé en solution aqueuse à 50 % par la société HOECHST.

### Exemple 2

### Réticulation et aptitude à la réticulation des films issus des latex de base

Le degré de pré-réticulation de chaque film latex obtenu par séchage à 23°C et le degré de post-réticulation thermique des films séchés comme précédemment puis soumis à un traitement thermique 15 mn à 160°C, ont été déterminés par une mesure des taux d'insolubles et des pourcentages d'acétone absorbé (indice de gonflement), sur des éprouvettes (moyenne de 3 mesures), après immersion 24 h dans l'acétone.

Les dimensions des éprouvettes sont de 10 x 25 mm, l'épaisseur étant comprise entre 1 et 2 mm.

| Référence | A | B | C |
|---|---|---|---|
| Indice de gonflement (23°C) | 30.3 | ∞ | 24.9 |
| Indice de gonflement (160°C) | 5.6 | 6.8 | 6.9 |
| % Insolubles (23°C) | 72.4 | 0 | 81.0 |
| % Insolubles (160°C) | 90.7 | 95.1 | 90.4 |

Le latex A présente un certain degré de pré-réticulation et une bonne aptitude à la post-réticulation thermique, alors que le latex B n'est absolument pas pré-réticulé, mais présente également une bonne aptitude à la réticulation thermique.

A noter que le latex C, qui présente dans ce cas la double fonctionnalité, conduit à des films faiblement pré-réticulés qui post-réticulent de façon significative, ce qui montre la persistance des fonctions réactives après la polymérisation.

Ce système autorise donc l'association des deux monomères fonctionnels au sein du même latex pour conduire à un latex plus performant (meilleure réticulation et plus faible teneurs en formol), que chacun des latex

### Exemple 3

### Mélange de latex coréactifs

Connaissant les caractéristiques des latex de base, divers mélanges des latex A et B ont été réalisés à température ambiante, les caractéristiques des films provenant de ces mélanges ayant été examinées comme précédemment après séchage à 23°C puis après traitement thermique 15 mn à 160°C.

| Mélange N° | Latex A % | Latex B % | IG (25°C) % | IG (160°C) % | % insoluble (25°C) % | % insoluble (160°C) % |
|---|---|---|---|---|---|---|
| 1 | 100 | 0 | 30.3 | 5.6 | 72.4 | 90.7 |
| 2 | 25 | 75 | 35.0 | 6.7 | 78.7 | 93.6 |
| 5 | 0 | 100 | ∞ | 6.8 | 0 | 95.1 |

Le mélange des deux latex conduit à un film présentant une excellente aptitude à la réticulation thermique.

### Exemple 4

### Propriétés mécaniques

Les propriétés mécaniques du film issu du mélange N° 2 sont comparées aux propriétés mécaniques des latex A et B, au travers d'un test de traction réalisé selon la norme ISO 527.

| Film | Allongement à la rupture (%) séchage 23°C | Contrainte à la rupture (MPa) séchage 23°C | Allongement à la rupture (%) recuit 160°C | Contrainte à la rupture (MPa) recuit 160°C |
|---|---|---|---|---|
| A | 347 | 1.93 | 134 | 1.3 |
| B | 1100 | 1.2 | 442 | 1.22 |
| Mélange N° 2 | 723 | 3,18 | 392 | 3,31 |
| C | > 1800 | 0,41 | 1400 | 1,71 |

### Exemple 5

### Dosage de formol

Le formol libérable est déterminé par analyse chromatographique, en soumettant un film à un traitement thermique de 30 mn à 160°C, les composés dégagés étant piégés dans une solution aqueuse contenant du dinitrophényl hydrazine destiné à dériver le formol. La solution aqueuse recueillies dans le piège est analysé en chromatographie en phase vapeur.

Le formol libre est obtenu par différence entre le formol libérable et le formol total ce dernier étant obtenu en soumettant un échantillon de latex au même traitement Due précédemment.

| Film | Formol libre (ppm) | Formol libérable (ppm) |
|---|---|---|
| A | 339 | 197 |
| B | - | - |
| C | 80 | 70 |
| Mélange N° 2 | 125 | 17 |

Le mélange de latex coréactif conduit à des taux de formol comparables à ceux que donne le latex difonctionnel mais présente l'avantage de conduire à des films post-réticulables comme on l'a vu ci-dessus.

## Revendications

1. Système monocomposant thermoréticulable à teneur en formol libérable faible à base de dispersion aqueuse contenant de 10 à 70% en poids de particules, de diamètre compris entre 50 et 500 nm, d'au moins un polymère **caractérisé en ce que** :
- au moins un polymère renferme des motifs issus de monomère M₁ portant une fonction acétal ;
- au moins un polymère renferme des motifs issus de monmère M₂ portant une fonction alkylol acrylamide ;
- tous les polymères renferment des motifs issus de monomère M₃ ne réagissant ni avec M₁ ni avec M₂
M₁ et M₂ peuvent être portés par le même polymère ou par des polymères distincts.

2. Système monocomposant selon la revendication 1, **caractérisé en ce que** M₁ et M₂ représentent chacun de 1 à 10 et de préférence de 2 à 8% en poids des particules en dispersion.

3. Système monocomposant selon la revendication 1 tel que le rapport M₁/M₂ est de 0,2 à 5.

4. Système monocomposant selon la revendication 1, 2 ou 3 tel que M₁ est choisi parmi :
- les N-(2,2-dialcoxy 1-hydroxy éthyl)-(méth)acrylamides et les N-(1,2,2-trialcoxy éthyl)-(méth)acrylamides, le terme alcoxy signifiant alcoxy en C₁-C₄, tels que :
. le N-(2,2-diméthoxy 1-hydroxy éthyl)-acrylamide ;
. le N-(2,2-diméthoxy 1-hydroxy éthyl)-méthacrylamide ;
. le N-(1,2,2-triméthoxy éthyl)-acrylamide ;
. le N-(1,2,2-triméthoxy éthyl)-méthacrylamide ;
. le N-(2,2-dibutoxy 1-hydroxy éthyl)-acrylamide ;
. le N-(2,2-dibutoxy 1-hydroxy éthyl)-méthacrylamide ;
. le N-(1,2,2-tributoxy éthyl)-acrylamide ;
. le N-(1,2,2-triméthoxy éthyl)-méthacrylamide ;
- le 4-acrylamidobutyraldéhyde diméthyl ou diéthyl acétal ;
- le méthacrylamidoacétaldéhyde diméthyl acétal ;
- l'acrylate de diéthoxypropyle ;
- le méthacrylate de diéthoxypropyle ;
- l'acryloyloxopropyl-1,3-dioxolane ;
- le méthacryloyloxopropyl-1,3-dioxolane ; et
- le N-(1,1-diméthoxy-but-4-yl)méthacrylamide.

5. Système monocomposant selon la revendication 4 tel que M₁ est le N(2,2-diméthoxy 1-hydroxyéthyl)acrylamide.

6. Système monocomposant selon l'une quelconque des revendications 1 à 5, **caractérisé en ce que** le monomère M₂ est choisi dans le groupe constitué de :
- N-méthylolacrylamide
- N-méthylolméthacrylamide
- esters d'acide N-méthylolmaléinamique
- N-méthylol-p-vinylbenzamide.

7. Système monocomposant selon la revendication 6, **caractérisé en ce que** le monomère M₂ est le N-méthylolacrylamide.

8. Système monocomposant selon l'une quelconque des revendications 1 à 7, **caractérisé en ce que** le monomère M₃ est choisi dans le groupe constitué de monomères à insaturation éthylénique tels que les monomères (méth)acryliques, styréniques, vinyliques.

9. Film réticulé constituant un revêtement comme peinture, vernis, apprêt ou adhésif utilisé dans le traitement du papier, du bois, du textile tel qu'on peut l'obtenir par la coalescence de systèmes monocomposants des revendications 1 à 8.

## Patentansprüche

1. Thermisch vernetzbares Einkomponentensystem mit geringem Gehalt an freisetzbarem Formaldehyd auf Basis einer wäßrigen Dispersion, die 10 bis 70 Gew.-% Teilchen mit einem Durchmesser zwischen 50 und 500 nm aus mindestens einem Polymer enthält, **dadurch gekennzeichnet, daß**:
- mindestens ein Polymer von einem Monomer M₁ mit einer Acetalfunktion abgeleitete Einheiten enthält;
- mindestens ein Polymer von einem Monomer M₂ mit einer Alkylolacrylamidfunktion abgeleitete Einheiten enthält;
- alle Polymere von einem Monomer M₃, das weder mit M₁ noch mit M₂ reagiert, abgeleitete Einheiten enthalten,
wobei M₁ und M₂ in demselben Polymer oder in verschiedenen Polymeren eingebaut sein können.

2. Einkomponentensystem nach Anspruch 1, **dadurch gekennzeichnet, daß** M₁ und M₂ jeweils 1 bis 10 Gew.-% und vorzugsweise 2 bis 8 Gew.-% der dispergierten Teilchen ausmachen.

3. Einkomponentensystem nach Anspruch 1 mit einem M₁/M₂-Verhältnis von 0,2 bis 5.

4. Einkomponentensystem nach Anspruch 1, 2 oder 3, bei dem M₁ unter:
- N-(2,2-Dialkoxy-1-hydroxyethyl)(meth)acrylamiden und N-(1,2,2-Trialkoxyethyl)(meth)acrylamiden, wobei Alkoxy für C₁-C₄-Alkoxy steht, wie:
· N-(2,2-Dimethoxy-1-hydroxyethyl)acrylamid;
· N-(2,2-Dimethoxy-1-hydroxyethyl)methacrylamid;
· N-(1,2,2-Trimethoxyethyl)acrylamid;
· N-(1,2,2-Trimethoxyethyl)methacrylamid;
· N-(2,2-Dibutoxy-1-hydroxyethyl)acrylamid;
· N-(2,2-Dibutoxy-1-hydroxyethyl)methacrylamid;
· N-(1,2,2-Tributoxyethyl)acrylamid;
· N-(1,2,2-Tributoxyethyl)methacrylamid;
- 4-Acrylamidobutyraldehyddimethylacetal oder -diethylacetal;
- Methacrylamidoacetaldehyddimethylacetal;
- Diethoxypropylacrylat;
- Diethoxypropylmethacrylat;
- Acryloyloxopropyl-1,3-dioxolan;
- Methacryloyloxopropyl-1,3-dioxolan und
- N-(1,1-Dimethoxybut-4-yl)methacrylamid
ausgewählt ist.

5. Einkomponentensystem nach Anspruch 4, bei dem es sich bei M₁ um N-(2,2-Dimethoxy-1-hydroxyethyl)-acrylamid handelt.

6. Einkomponentensystem nach einem der Ansprüche 1 bis 5, **dadurch gekennzeichnet, daß** das Honomer M₂ aus der Gruppe bestehend aus:
- N-Methylolacrylamid
- N-Methylolmethacrylamid
- N-Methylolmaleinamidsäureestern und
- N-Methylol-p-vinylbenzamid
ausgewählt ist.

7. Einkomponentensystem nach Anspruch 6, bei dem es sich bei dem Monomer M₂ um N-Methylolacrylamid handelt.

8. Einkomponentensystem nach einem der Ansprüche 1 bis 7, **dadurch gekennzeichnet, daß** das Monomer M₃ aus der Gruppe bestehend aus ethylenisch ungesättigten Monomeren, wie (Meth)acryl-, Styroloder vinylmonomeren, ausgewählt ist.

9. Vernetater Film, der eine Beschichtung wie ein Anstrichmittel, einen Lack, eine Appretur oder einen Klebstoff zur Verwendung bei der Behandlung von Papier, Holz oder Textilien bildet und durch Koaleszenz der Einkomponentensysteme nach den Ansprüchen 1 bis 8 erhältlich

## Claims

1. Heat-crosslinkable single-component system with a low content of releasable formaldehyde based on an aqueous dispersion containing from 10 to 70% by weight of particles, with a diameter of between 50 and 500 nm, of at least one polymer, **characterized in that**:
- at least one polymer contains units resulting from monomer M₁ carrying an acetal functional group;
- at least one polymer contains units resulting from monomer M₂ carrying an alkylolacrylamide functional group;
- all the polymers contain units resulting from monomer M₃ reacting neither with M₁ nor with M₂;
M₁ and M₂ can be carried by the same polymer or by distinct polymers.

2. Single-component system according to Claim 1, **characterized in that** M₁ and M₂ each represent from 1 to 10 and preferably from 2 to 8% by weight of the dispersed particles.

3. Single-component system according to Claim 1, such that the M₁/M₂ ratio is from 0.2 to 5.

4. Single-component system according to Claim 1, 2 or 3, such that M₁ is chosen from:
- N-(2,2-dialkoxy-1-hydroxyethyl) (meth)acrylamides and N-(1,2,2-trialkoxyethyl)(meth)acrylamides, the term alkoxy meaning C₁-C₄ alkoxy, such as:
. N-(2,2-dimethoxy-1-hydroxyethyl)acrylamide;
. N-(2,2-dimethoxy-1-hydroxyethyl)methacrylamide;
. N-(1,2,2-trimethoxyethyl)acrylamide;
. N-(1,2,2-trimethoxyethyl)methacrylamide;
. N-(2,2-dibutoxy-1-hydroxyethyl)acrylamide;
. N-(2,2-dibutoxy-l-hydroxyethyl)methacrylamide;
. N-(1,2,2-tributoxyethyl)acrylamide;
. N-(1,2,2-tributoxyethyl)methacrylamide;
- 4-acrylamidobutyraldehyde dimethyl or diethyl acetal;
- methacrylamidoacetaldehyde dimethyl acetal;
- diethoxypropyl acrylate;
- diethoxypropyl methacrylate;
- acryloyloxopropyl-1,3-dioxolane;
- methacryloyloxopropyl-1,3-dioxolane; and
- N-(1,1-dimethoxybut-4-yl)methacrylamide.

5. Single-component system according to Claim 4, such that M₁ is N-(2,2-dimethoxy-1-hydroxyethyl)acrylamide.

6. Single-component system according to any one of Claims 1 to 5, **characterized in that** the monomer M₂ is chosen from the group composed of:
- N-methylolacrylamide
- N-methylolmethacrylamide
- esters of N-methylolmaleinamic acid
- N-methylol-p-vinylbenzamide.

7. Single-component system according to Claim 6, **characterized in that** the monomer M₂ is N-methylolacrylamide.

8. Single-component system according to any one of Claims 1 to 7, **characterized in that** the monomer M3 is chosen from the group composed of monomers containing ethylenic unsaturation, such as (meth)acrylic, styrene or vinyl monomers.

9. Crosslinked film constituting a coating as paint, varnish, finish or adhesive used in the treatment of paper, wood or textiles, such that it can be obtained by the coalescence of single-component systems of Claims 1 to 8.
